# EUROPEAN PATENT SPECIFICATION

(11) **EP 1 070 446 B1**
(45) Date of publication and mention of the grant of the patent: **26.06.2002**
(21) Application number: 99913285.5
(22) Date of filing: 20.03.1999
(51) Int. Cl.: H05K 5/02

(54) **INSERTABLE CARD FOR ELECTRONIC EQUIPMENT**
STECKBARE KARTE FÜR EIN ELEKTRISCHES GERÄT
CARTE POUVANT ETRE INSEREE, DESTINEE A UN EQUIPEMENT ELECTRONIQUE

(30) Priority: 07.04.1998 DE 19815549; 08.10.1998 DE 19846366
(43) Date of publication of application: 24.01.2001
(73) Proprietor: ITT MANUFACTURING ENTERPRISES, INC., Wilmington, Delaware 19801 (US)
(72) Inventor: ZEYFANG, Jan, D-71397 Leutenbach (DE); LEARMONTH, Tom, North Waltham, Hampshire RG25 2EL (GB); GOLLHOFER, Martin, D-70736 Fellbach (DE); SCHIMMELE-BRELL, Tobias, D-71384 Weinstadt (DE); SCHREMMER, Andreas, D-73614 Schorndorf (DE)
(74) Representative: Dreiss, Fuhlendorf, Steimle & Becker
(86) International application number: PCT/EP99/01870
(87) International publication number: WO 99/52338

(56) References cited:
- WO-A-96/10899
- US-A- 4 327 953
- PATENT ABSTRACTS OF JAPAN vol. 010, no. 149 (P-461), 30 May 1986 (1986-05-30) & JP 61 000991 A (MATSUSHITA DENKI SANGYO KK;OTHERS: 01), 6 January 1986 (1986-01-06)
- PATENT ABSTRACTS OF JAPAN vol. 010, no. 102 (P-448), 18 April 1986 (1986-04-18) & JP 60 234285 A (MATSUSHITA DENKI SANGYO KK), 20 November 1985 (1985-11-20)

## Description

The present invention relates to an insertable card for electronic equipment as generically defined by the preamble to claim 1.

Such insertable cards are used for instance as PC cards, under the standards of the Personal Computer Memory Card Industry Association (PCMCIA) in portable computers (laptops, notebooks) in which the identification of the user is required for use or access to a service and is gained by a chip card, such as a SIM card. Such services may involve credit cards, online services, or the mobile telephone system, for instance.

For such insertable cards, which are provided with a receptacle for a chip card, the requisite low height of the PC card, for instance, of about 5 mm must be taken into account; furthermore, the PC card should remain closed while the chip card (SIM card) is being replaced, and the shielding must be maintained as before. Furthermore, the stability of the PC card should not be impaired, and the insertion and removal of the chip card should be accomplished as simply as possible.

By way of example, an insertable card is known (see e.g. JP-A-61 000 991) in which the receptacle for the chip card is a separate component that can be inserted into the insertable card and into whose pivotable lid the chip card is inserted. The height of this known receptacle is problematic, on the one hand, and on the other problems arise in shielding with regard to the plastic lid. In another known insertable card, the receptacle is designed such that the chip card is inserted from the short side of the insertable card. This kind of short-side receptacle for the chip card in the insertable card affects the stability of the insertable card, because a cutout has to be provided on the short side, and the short side is substantially responsible for the rigidity. Such a receptacle, therefore, in most cases, requires a frameless insertable card, because otherwise the load-bearing frame would have to be interrupted.

It is therefore the object of the present invention to create an insertable card for electronic equipment of the type referred to at the outset, whose chip card receptacle does not impair or negatively affect the structural height and stability of the insertable card.

To attain this object, in an insertable card for electronic equipment of the type referred to at the outset, the characteristics recited in claim 1 are provided.

By the provisions of the invention, it is attained that the chip card receptacle can be used not only for frameless insertable cards but also for those with reinforcing frames, without any detriment to the stability of the insertable card. Because the frame is disposed directly on the printed circuit board, the requisite slight height of the insertable card is preserved.

In a first exemplary embodiment, the characteristics of claim 2 are provided, according to which the frame is a separate component surrounding the contacting device and rests in direct alignment below the opening in the housing part.

An advantageous feature of the closable opening is obtaining by the characteristics of one or more claims 4-7. This feature contributes to the preservation of the requisite structural height, because above the chip card only a few tenths of a millimeter are needed for the slide and the guide groove. In addition, the slide remains below the applicable housing part. Another advantage is the ease of use of the slide that closes the opening of the applicable housing part.

With the characteristics of claim 8, it is attained that the opening and closing position of the slide is defined. This can be done for instance by means of lateral notches in the slide that cooperate with a hook on the frame, or by means of projections that cooperate with the opening edge of the applicable housing part.

To maintain the electrical shielding of the insertable card despite the opening in the applicable metal housing part, the characteristics of one or more of claims 9, 21 and 22 are provided.

In a second and third exemplary embodiment corresponding to the characteristics of claim 10, the frame is integral with the contacting device. In accordance with the characteristics of claim 11, the frame of the contacting device is disposed partly direcetly below the opening, while in the third exemplary embodiment in accordance with the characteristics of claim 16 the frame of the contacting device and the opening are longitudinally offset from one another. While in the second exemplary embodiment the chip card is inserted obliquely, shifted somewhat in on direction, and then after being lowered in the opposite direction is shifted back to the operating position, in the third exemplary embodiment the chip card is inserted parallel to the housing part and then shifted in the direction toward the contacting device.

Advantageous features of the second exemplary embodiment are defined by the characeristics of one or more claims 11-15.

An advantageous feature of the third exemplary embodiment is defined by the characteristics of claim 17.

With the characteristics of one or more of claim 18-20, it is assured that the chip card cannot be inserted incorrectly into the insertable card.

With the characteristic of claim 23 and/or claim 24, it is attained that on the one hand, the chip card rests on the contacting device in a manner prestressed for optimal contact-making, and on the other, whenever the slide is opened, the chip card is lifted by the spring tongues to make it simple to grasp.
In a fourth exemplary embodiment corresponding to the characteristics of claim 25, it is attained that, since the grooves are omitted, the metal slide can be guided more securely and stably on the frame, and at the same time the arrangement is less vulnerable to frequent motions and external stresses. Because of the omission of the grooves, the structural height of the frame and thus of the insertable card can be reduced still further. Furthermore, the extensions of the long edges of the first frame contribute to further stabilization and stiffening of the insertable card.

With the characteristics of claim 26, further stabilization of the frame component, comprising both frames is attained.

Advantageous features of the guidance of the metal slide and the frames are recited in the characteristics of claims 27 and/or 28, or 29 and/or 30. As a result, the front region, which comes under the opening in the housing, is guided in the transverse direction and in a direction at right angles to it, while the rear region of the metal slide, for the sake of keeping the low structural height, is guided only in the transverse direction, which is sufficient, since this rear region is always located underneath the applicable housing component.

With the characteristics of claim 30, as with the characteristics of claim 31, it is additionally attained that the starting and ending point of the motion of the metal slide, on the frame component are determined precisely. With the characteristics of claim 32 and/or 33, an additional stabilization of the printed circuit board in the installed state is attained. In certain cases, it may be expedient to provide the characteristics of claim 34, specifically whenever the printed circuit board, because of certain somewhat higher electronic components, is disposed in inclined fashion inside the housing.

Advantageously, in accordance with the characteristics of claim 35, the frame component is metallized, resulting in optimal shielding because of the electrical connection among the housing parts, metal slide, and, via the frame component, the printed circuit board.

With the characteristics of claim 36, simple connection or fixation of the frame component on the printed circuit board is attained.

Further details of the invention can be learned from the ensuing description, in which the invention is described and explained in further detail in terms of the exemplary embodiments shown in the drawing. Shown are:
Fig. 1, in an exploded perspective view, an insertable card for electronic equipment in accordance with a first exemplary embodiment of the present invention;
Fig. 2, on a larger scale, the components definitive for the chip card receptacle;
Fig. 3, in a perspective view, the assembled insertable card of Fig. 1;
Fig. 4, in a perspective view, a chip card receptacle of the insertable card in accordance with a second exemplary embodiment of the present invention;
Fig. 5, in a schematic plan view, the assembled insertable card in accordance with the second exemplary embodiment.
Fig. 6, in a schematic perspective view; an insertable card with a chip card receptacle in accordance with a third exemplary embodiment of the present invention;
Fig. 7, a view corresponding to Fig. 6 showing the chip card inserted into the insertable card;
Fig. 8, in an exploded perspective view, an insertable card for electronic equipment in accordance with a fourth exemplary embodiment of the present invention;

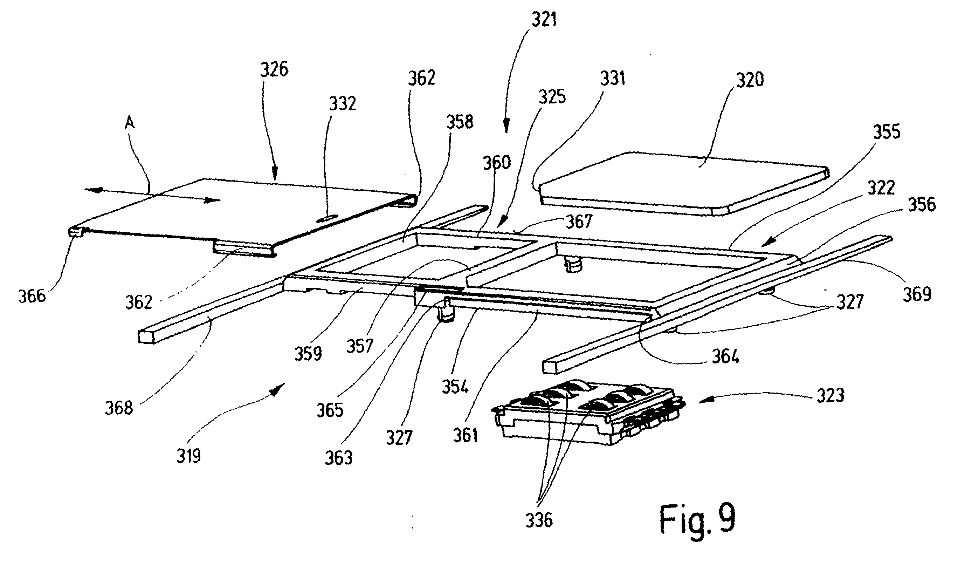

Fig. 9, on a larger scale, the components definitive for the chip card receptacle; and
Fig. 10, in a perspective view, the assembled insertable card of Fig. 8.

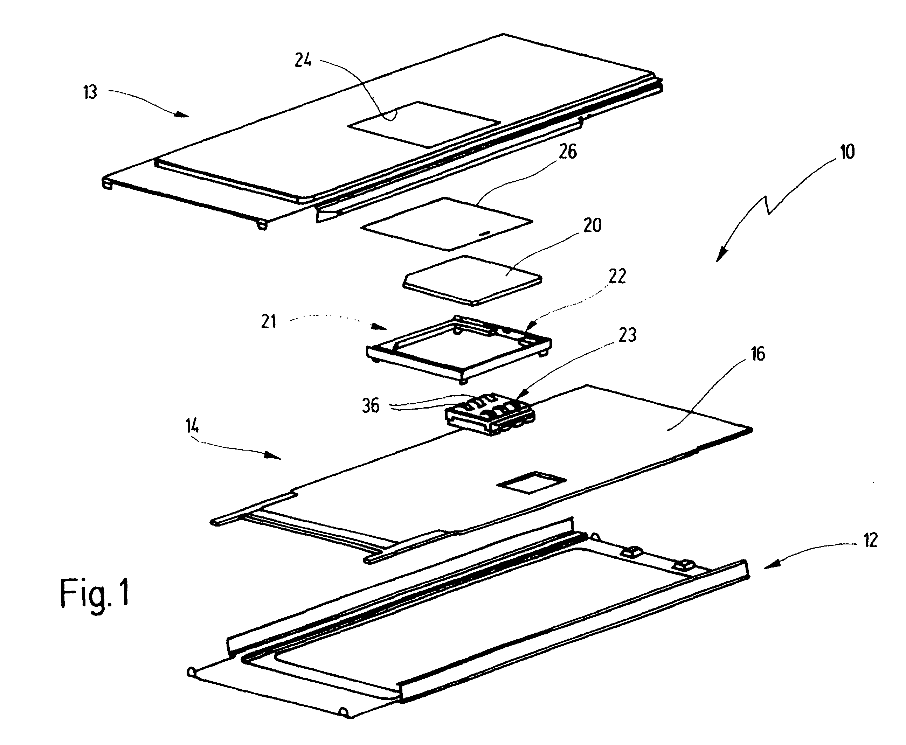

As shown in Fig. 1, the insertable card 10, 110, 210 in accordance with the first to third exemplary embodiments shown for the present invention, which is suitable for use in electronic equipment, has an elongated rectangular and very flat frameless housing, which is composed of a lower metal housing part 12 and an upper metal housing part 13, 113, 213 which can be or is connected to the upper housing part along the longitudinal edge in detent-locking fashion. A unit 14, which includes a printed circuit board 16 equipped with electronic components and, disposed on at least one transverse end of the printed circuit board 16, a plug connector 17 connected to the printed circuit board 16, is disposed and held in fixed fashion between the two housing parts 12 and 13, or 113, 213. The insertable card 10, 110, 210 also has a device 21, 121, 221 for receiving and molding a chip card 20, for instance in the form of a SIM card, as it is used in PC cards, embodied as insertable cards 10 under the standards of the Personal Computer Memory Card Industry Association (PCMCIA), in portable computers (laptops, notebooks).

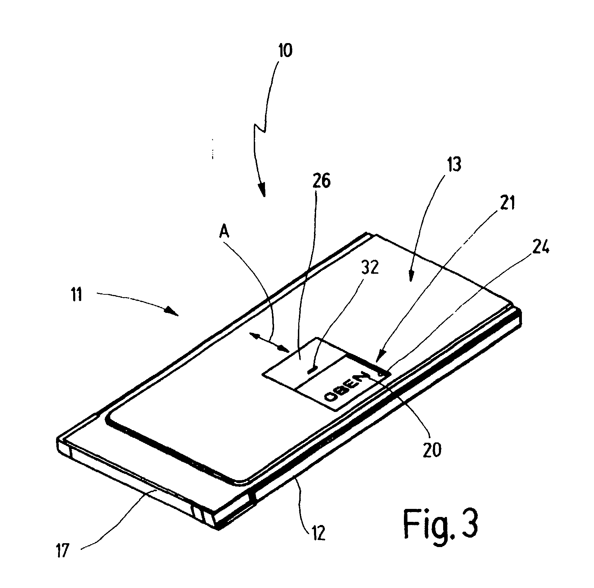

The device 21 in the first exemplary embodiment of Figs. 1-3 has a frame 22, which can be secured to the printed circuit board 16, and a contact block or contacting device 23, which is connected both electrically and mechanically to the printed circuit board 16 and is disposed inside the frame 22. A rectangular opening is provided for the device 21 in the upper housing part 13; this opening can be closed with the aid of a sliding lid 26 and is located approximately in the center of the housing longitudinally, with a short edge of the opening near a long edge of the housing 11.

The frame 22, which is preferably plastic, is fixed with its four corner pegs 27, which for instance protrude downward, in corresponding bores of the printed circuit board 16. On the top, the frame 22 is provided with guide grooves 28 machined into the parallel long sides 29, and the sliding lid 26 is displaceably received in these grooves in the direction of the double-headed arrow A. The inside dimensions of the frame 22 correspond to the outer dimensions of the chip card 20, so that the chip card is received without substantial play. The chip card 20 and the frame 22 are provided on one corner with a encoding means 31 or 31' in the form of a bevel of the corner, so that the chip card 20 can be inserted into the frame 22 only in a specifically defined position. The position of the (inserted) chip card 20 inside the frame 22 is such that the sliding lid 26 can slide along the top of the chip card 20.

In the assembled state of the insertable card 10, the sliding lid 26 is located below the underside or inside of the upper housing part 13, specifically at a very slight distance from it. If the sliding lid 26 is in its opening position that at least partly uncovers the opening 24, then the chip card 20 can be inserted into the frame 22 or removed from the frame 22. This means that the inside diameter of the frame opening 22 is identical to and aligned with the inside diameter of the opening 24 in the housing part. On one end, which is always visible inside the opening 24, the sliding lid 26 has an indentation 32, by way of which the sliding lid 26 can be moved, with the aid of a pin or pen or the like, in the direction of the double-headed arrow A. The contact block 23 is located inside the frame 22 and underneath the underside of the inserted chip card 20; it is connected electrically and mechanically by its underside to the printed circuit board 16 and on its top has contact tongues 36, on which the chip card 20 rests, making electrical contact, in the inserted state. When the sliding lid 26 is closed, the inserted chip card 20 is pressed against the spring tongues 36 for the sake of secure contact-making. When the sliding lid 26 is opened, the contact tongues 36 press the chip card 20 upward, so that the chip card 20 can easily be grasped with the hand.

To preserve the electrical shielding of the insertable card 10 by the housing 11 despite the device 21 or the housing part opening 24, the frame 22 is either provided with an electrically conductive coating on the appropriate surfaces, or the frame 22 is made entirely of a conductive plastic. The sliding lid 26 is also connected in a manner that makes electrical contact to the underside of the upper metal housing part 13. This can be done for instance by providing the sliding lid 26 with recesses oriented toward the underside of the metal housing part 13. As a result, the electrical shielding between the upper housing part 13 and the printed circuit board 16 is uninterrupted.

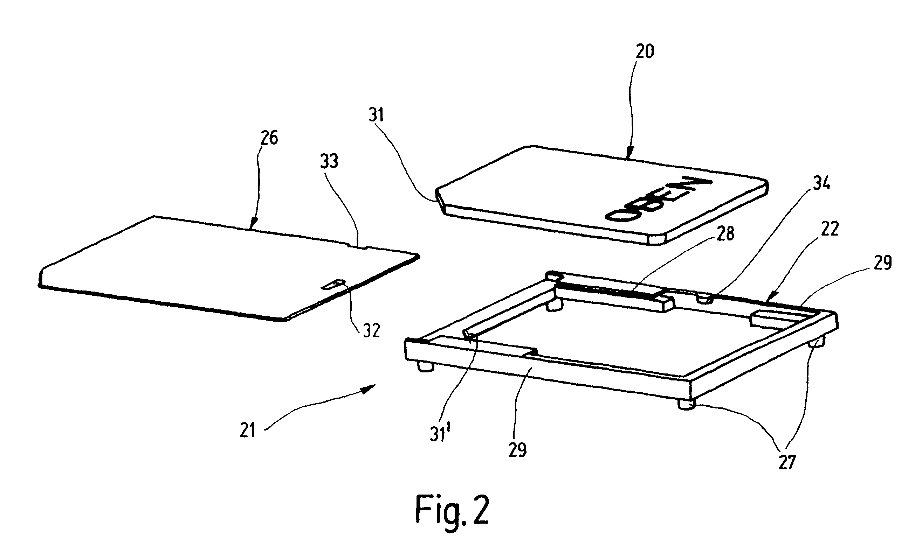

The sliding lid 26 and/or the frame 22 is also provided with a detent device for fixing the open and/or closed position of the sliding lid 26. As shown in Fig. 2, the sliding lid has a notch 33 on the long side, and the frame has a detent lug 34 on the inside of its long edge for detent positioning of the open position.

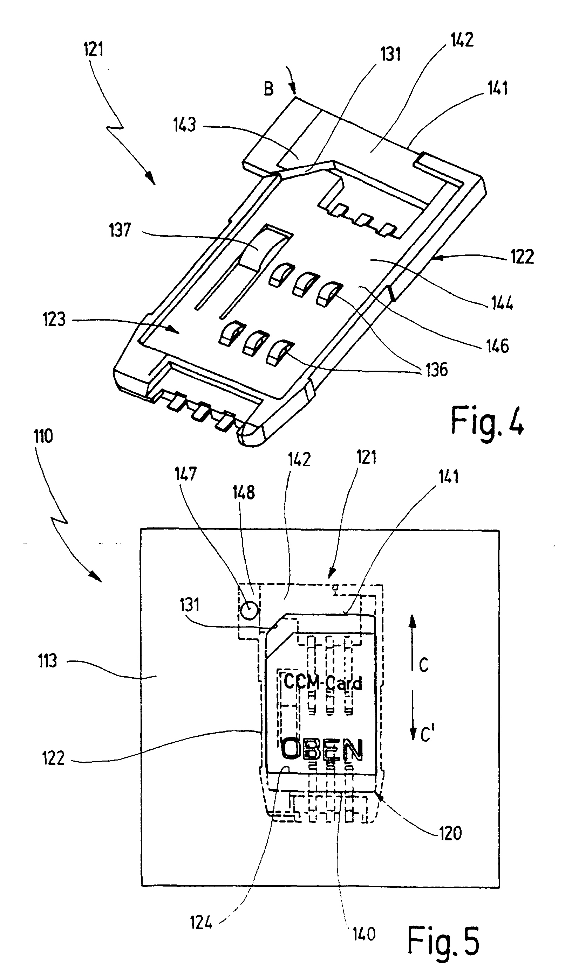

In the second exemplary embodiment, shown in Figs. 4 and 5, the device 121 has a frame 122, which is integral with the contacting device 123 as shown in particular in Fig. 4. As in the first exemplary embodiment, the device 121 is secured in a contact-making way to a printed circuit board, not shown here. The contacting device 123 again has contact tongues 136, with which the chip card 120 is connected in contact-making fashion and on which the chip card 120 rests in prestressed fashion. The contacting device 123 also has one additional spring tongue 137, by way of which the chip card 120 is pressed, as by the contact tongues 136, against the underside of the housing part 113 in a way to be described further hereinafter. The frame 122 extending all the way around has an inside width and an inside length that correspond to the outer dimensions of the chip card 120, and as the frame 22, a corresponding encoding means 131 is provided. One transverse end 141 of the frame 122 is formed by a movable frame element 142, which takes the form of a rocker. This rocker 142 can be moved in accordance with the arrow B, that is, downward in the plane of the drawing in Fig. 4, against a resilient support, not shown. In this way, the top 143 of the rocker 142 can be moved below the support plane 144 of the inside of the frame 122.

In Fig. 5, the length of the opening 124 in the upper housing part 113 is shorter than the length of the interior 146 of the frame 122. The disposition of the interior 146 of the frame 122 and the opening 124 in the upper housing part 113 is such that the two receptacles 146, 124 of equal width are disposed symmetrically in the longitudinal direction; that is, both one transverse end 141 and the other transverse end 140 of the frame 122 are located on the far side of the opening 124 and are thus covered by the upper housing part 113. The upper housing part 113 also has a bore 147, which is located opposite a side region 148 of the rocker 142.

For insertion of the chip card 120 into the insertable card 110, the rocker 142 is pressed or pivoted in the direction of the arrow B through the bore 147, with the aid of a pin or pen, so that the chip card 120, can be thrust obliquely from above through the opening 124 into the device 121 in the direction of the arrow C. As soon as the rear edge, in terms of the insertion direction C, of the chip card 120 is aligned with the rear edge of the opening 124, the chip card 120 is lowered and moved into the interior 146 of the frame 122 and shifted back again inside the frame in the opposite direction represented by the arrow C'. At the end of this motion in the direction of the arrow C', the rocker 142 moves free of the chip card 120, so that it can pivot back again counter to the direction B. The chip card 120 is then retained without substantial play inside the receptacle space 146 of the frame 122 and is pressed against the underside of the upper housing part 113 by the contact tongues 136 and the additional spring tongue 137.

The removal of the chip card 120 is done in correspondingly reverse order; once again, the rocker 142 has to be moved downward. The removal of the chip card 120 is reinforced by the additional spring tongue 137, with whose aid the rear end of the chip card 120 that has come free is moved upward through the opening 124.

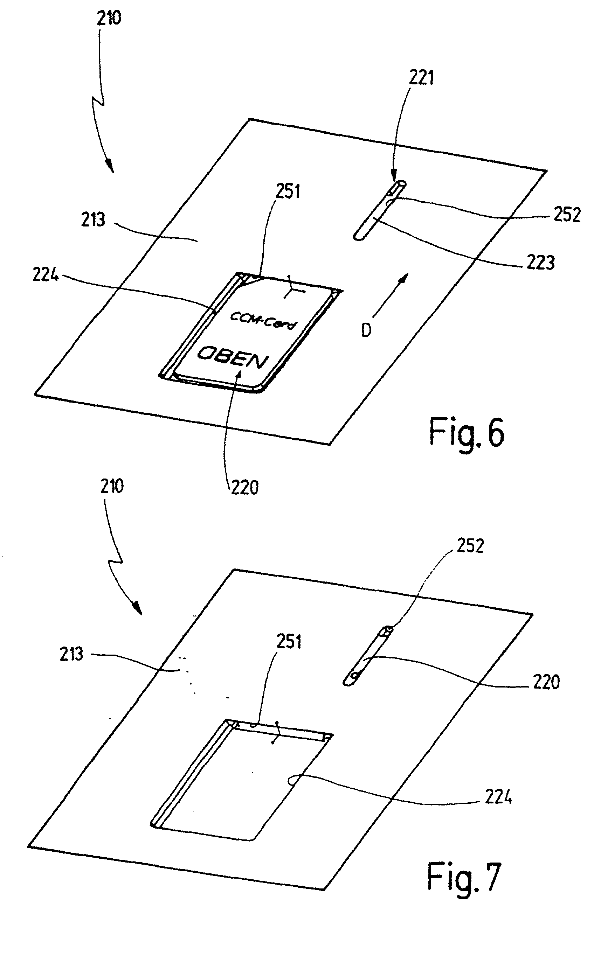

In the third exemplary embodiment, shown in Figs. 6 and 7, the device 221, not shown in detail here, again has a frame integral with a contacting device 223; the contacting device corresponds substantially to the contacting device 123 with the frame 122 shown in Fig. 4. In this exemplary embodiment, the device 221 is provided with a placement opening 224 in the upper housing part 213 that is offset longitudinally, that is, in the direction of the arrow D, from the contacting device 223. To form the placement opening 224, the upper housing part 213 has an indentation or depression, which is provided with a slot 251 on its peripheral region oriented toward the device 221.

The insertion of the chip card 220 into the insertable card 210 is done in such a way that the chip card 220 is placed in the substantially same-sized depression 224 and is thrust in the direction of the arrow D through the slot 251 into the contacting device 223, open on one transverse end, until it meets a stop on the other transverse end (Fig. 7). In the region of the contacting device 223, the upper housing part 213 is provided with a longitudinal slot 252, through which the chip card 220 is engaged with the aid of a pin or pen or the like and can be shifted back again counter to the direction D for removal. In the inserted state shown in Fig. 7, the chip card 220 is pressed against the underside of the upper housing part 213 by the contact tongues 16 and the additional spring tongue 137, described in conjunction with the second exemplary embodiment, so that the chip card 220 cannot slide backward unintentionally.

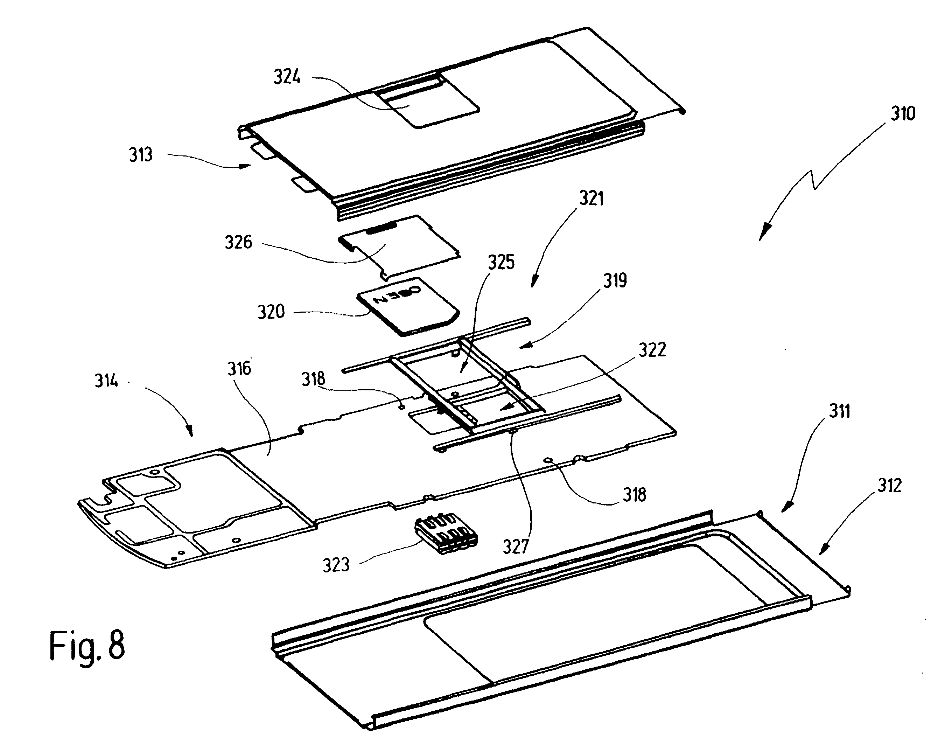

As shown in Fig. 8, the insertable card 310 in accordance with the fourth exemplary embodiment shown for the present invention, which also is suitable for use in electronic equipment, has an elongated rectangular and very flat frameless housing 311, which is composed of a lower metal housing part 312 and an upper metal housing part 313 which can be or is connected to the upper housing part along the longitudinal edge in detent-locking fashion. A unit 314, which includes a printed circuit board 316 equipped with electronic components (not shown here) and, disposed on at least one transverse end of the printed circuit board 316, a plug connector (not shown here) connected to the printed circuit board 316, is disposed and held in fixed fashion between the two housing parts 312 and 313. The insertable card 310 also has a device 321 for receiving and holding a chip card 320, for instance in the form of a SIM card, as it is used in PC cards, embodied as insertable cards 310 under the standards of the Personal Computer Memory Card Industry Association (PCMCIA), in portable computers (laptops, notebooks).

The device 321 in this exemplary embodiment shown has a frame component 319, which can be secured to the printed circuit board 316, and a contact block or contacting device 323, which is connected both electrically and mechanically to the printed circuit board 316 and is disposed inside a first frame 322 of the frame component 319. In the longitudinal direction, the first frame 322 of the frame component 319 is lengthened by a second frame 325 in the direction of the transverse extent of the printed circuit board 316. For the device 321, a rectangular opening 324 is contemplated, which can be closed with the aid of a sliding lid 326 and is located approximately in the lengthwise center thereof, and with a short edge near a long edge of the housing 311.

The frame component 319, which is in one piece and preferably is of plastic, essentially has the two frames 322 and 325, of which the first frame 322 extends in closed fashion all the way around and is composed of the two parallel longitudinal legs 354 and 355 and the two transverse leg 356 and 357. The second frame 325 begins at the center transverse leg 357 with its parallel lengthening legs 359 and 360, which are joined together on the outside via a transverse leg 358. The first frame 322 is provided with formed-on legs 327, for instance four in number, that protrude downward and are spaced apart and can be inserted in fixed fashion in corresponding bores 318 of the printed circuit board 316. The first frame 322 of the frame component 319 is provided on its longitudinal legs 354 and 355 with a longitudinally extending undercut 361, which is engaged by a U-shaped guide tab of the sliding lid 326. The guide tabs 362 are integrally formed, facing one another, onto a front region of the sliding lid 326 and because of their U-shaped bend fit over the remaining rib region of the longitudinal legs 354, 355, so that the metal sliding lid 326 is displaceable in the direction of the double-headed arrow A along the two longitudinal legs 354 and 355 of the first frame 322. The undercuts 361 in the longitudinal legs 354 and 355 end in a region before the center transverse leg 357, so that for the guide tabs 362 a rear terminal stop 363 in the opening direction of the sliding lid 326 is formed. The same is correspondingly true for the closing direction, in which the guide tabs 362 strike the flat part 364 of the outer transverse leg 356. The sliding leg 326 also has two rectangularly bent-over guide tabs 366 on its other end, which can slide along the outer short sides 367 of the two lengthening legs 359 and 360. While the two front U-shaped guide tabs 362 the sliding lid at 326 both in the transverse direction and in the direction of the thickness of the frame component 319 are fixed thereon, the two rear guide tabs 366 accomplish merely a fixation of the sliding lid 326 in the transverse direction. The guidance of one of the rear guide tabs 366 on the lengthening leg 360 is continued in a groove 365, which is open from the top of the frame component 319 and whose end likewise forms a stop for the sliding lid 326 in the closing direction. The sliding lid 326 rests flatly on the top of the frame component 319 and slides on it.

The inside dimensions of the first frame 322 of the frame component 319 correspond to the outer dimensions of the chip card 320, so that the chip card is received without substantial play. The chip card 320 and the first frame 322 are provided on one corner with a encoding means 331 in the form of a bevel of the corner, so that the chip card 320 can be inserted into the frame 322 only in a specifically defined position. The position of the (inserted) chip card 320 inside the first frame 322 is such that the sliding lid 326 can slide along the top of the chip card 320.

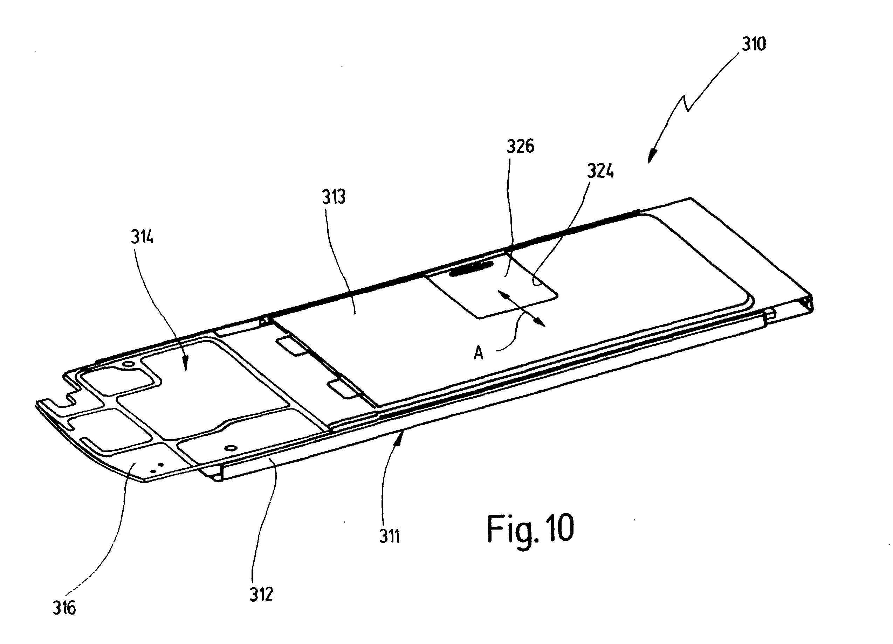

In the assembled state of the insertable card 310 shown in Fig. 10, the sliding lid 326 is located below the underside or inside of the upper housing part 313, specifically at a very slight distance from it. If the metal sliding lid 326 is in its opening position that at least partly uncovers the opening 324 in the upper housing part 313, then the chip card 320 can be inserted into the frame 322 or removed from the frame 322. This means that the inside diameter of the opening of the frame 322 is identical to and aligned with the inside diameter of the opening 324 in the housing part 313. On one end, which is always visible inside the opening 324 of the upper housing part 313, the sliding lid 326 has a protrusion 332, by way of which the sliding lid 326 can be moved in the direction of the double-headed arrow A. The contact block 323 is located inside the first frame 322 and underneath the underside of the inserted chip card 320; it is connected electrically and mechanically by its underside to the printed circuit board 316 and on its top has contact tongues 336, on which the chip card 320 rests, making electrical contact, in the inserted state. When the sliding lid 326 is closed, the inserted chip card 320 is pressed against the spring tongues 336 for the sake of secure contact-making. When the sliding lid 326 is opened, the contact tongues 336 press the chip card 320 upward so that it can easily be grasped with the hand.

To preserve the electrical shielding of the insertable card 310 by the housing 311 despite the device 321 or the housing part opening 324, the frame component 319 is either provided with an electrically conductive coating on the appropriate surfaces or its entirety, or is made entirely of a conductive plastic. The sliding lid 326 is also connected in a manner that makes electrical contact to the underside of the upper metal housing part 313. This can be done for instance by providing the sliding lid 326 with recesses oriented toward the underside of the metal housing part 313. As a result, the electrical shielding between the upper housing part 313 and the printed circuit board 316 is uninterrupted.

Parallel struts 368 and 369 are formed onto the two outer transverse legs 356 and 358 of the frame component 319; they are thinner than the aforementioned transverse legs, and their underside is in the same plane with the underside of the transverse legs. The two struts 368, 369 are longer than the applicable transverse legs 356, 358. In this exemplary embodiment shown, the struts 368, 369 are wedgelike in side view, specifically whenever as here the printed circuit board 316 is in a slightly inclined position inside the housing 311. By means of the struts 368, 369, both the frame component 319 and the printed circuit board 316 are additionally fixed in the installed state in the housing 311, especially whenever conductive elastomers are used on the opposite side of the printed circuit board 316.

## Claims

1. An insertable card (10, 110, 210, 310) for electronic equipment, of approximately elongated rectangular, flat form, having a housing (11, 111, 211, 311), having a printed circuit board (16, 316) which is received in the housing and on which a contacting device (23, 123, 223, 323) for a chip card (20, 120, 220, 320), such as a SIM card, is held electrically, and having a receptacle the frame (22, 122, 322) of which receives the introduced chip card (20, 120, 220, 320), and communicating with an opening (24, 124, 224, 324) in one of the flat sides of the housing (11, 111, 211, 311), **characterized in that**, the housing (11, 111, 211, 311) has an upper and lower housing part (12, 13; 113, 213, 313) embodied essentially in the form of half shells, one of the two housing parts (12, 13; 112, 213, 313) having the opening which communicates with the frame (22, 122, 322), which is held on the printed circuit board (16, 316), and **in that** the chip card (20, 120, 320) lying below the surface of the corresponding housing part when inserted is pressed by a means (26, 113, 213) against the contacting device (23, 123, 223, 323).

2. The insertable card of claim 1, **characterized in that** the frame (22) is a separate component from the contacting device (23) and is secured to the printed circuit board (16).

3. The insertable card of claim 2, **characterized in that** the frame (22) is closed all the way around and is aligned with the opening (24) on all sides.

4. The insertable card of claim 2 or 3, **characterized in that** the opening (24) is closable, and that for its closure a metal slide (26) is provided in the applicable housing part (12, 13).

5. The insertable card of claim 4, **characterized in that** the slide (26) is disposed in the region of the underside of the applicable housing part (12, 13).

6. The insertable card of claim 4 or 5, **characterized in that** the slide (26) is guided in the frame (22).

7. The insertable card of claim 6, **characterized in that** the frame (22) has guide grooves (28) for the slide (26) on both long sides (29).

8. The insertable card of claim 7, **characterized in that** detent positions (33, 34) are provided in the region of at least one of the guide grooves (28).

9. The insertable card of at least one of claims 4-8, **characterized in that** the metal slide (26) has projections for making contact with the underside of the applicable metal housing part (13).

10. The insertable card of claim 1, **characterized in that** the frame (128) is a component integral with the contacting device (123, 223).

11. The insertable card of claim 10, **characterized in that** the opening (124, 224) in the applicable housing part (113, 213) has a width corresponding to the inside width of the frame (122) of the contacting device (123, 223), but is shorter in the longitudinal direction.

12. The insertable card of claim 11, **characterized in that** the frame (124) of the contacting device is disposed such that its two transverse ends are covered by the applicable housing part (113).

13. The insertable card of claim 11 or 12, **characterized in that** the frame (122) of the contacting device (123) is provided on one transverse end with a movable retaining element (142), which increases the inside height toward the underside of the applicable housing part.

14. The insertable card of claim 13, **characterized in that** the retaining element is formed by a resilient rocker (142), which is actuatable through a recess (147) in the applicable housing part (113).

15. The insertable card of at least one of claims 10-14, **characterized in that** the opening (124) in the housing part is closable by means of the chip card (120).

16. The insertable card of claim 10, **characterized in that** the opening (224) in the applicable housing part (213) is disposed longitudinally offset relative to the frame of the contacting device (223).

17. The insertable card of claim 16, **characterized in that** the housing part (213) is provided with a longitudinal slot (252) in a region above the contacting device (223).

18. The insertable card of at least one of the foregoing claims, **characterized in that** the frame (22, 122) is provided on its inside edge with an encoding element (31, 131) for the chip card (20, 120, 220).

19. The insertable card of claim 18, **characterized in that** the encoding element is formed by a beveled corner (31, 131) in the frame (22, 122).

20. The insertable card of at least one of claims 13, 14, 18 and 19, **characterized in that** the encoding element (131) is provided on the retaining element (242).

21. The insertable card of one of the foregoing claims, **characterized in that** the frame (22) is lined with conductive material in some regions.

22. The insertable card of at least one of claims 1-20, **characterized in that** the frame (22) comprises electrically conductive plastic.

23. The insertable card of one of the foregoing claims, **characterized in that** the contacting device (23, 123, 223) is provided with spring tongues (36, 136), on which the chip card (20, 120, 220) rests in an electrically contact-making fashion.

24. The insertable card of one of the foregoing claims, **characterized in that** the contacting device (123, 232) is provided with an ejection spring (137).

25. The insertable card (310) of claim 1, **characterized in that** the opening (324) is closable by means of a metal slide (326) and that the metal side (326), at least with its front and rear regions with its long edges, fits guidingly around and over the frame (322) or extensions (359, 360) of the long edges (354, 355) of the frame (322).

26. The insertable card of claim 25, **characterized in that** the extensions (359, 360) of the long edges (354, 355) of the frame (322) are supplemented to form a second frame (325).

27. The insertable card of claim 25 or 26, **characterized in that** the frame (322) on each long edge has a respective longitudinal rib, formed by an undercut (361) and jointly forming the top, which rib is embraced by a tab (362), bent over into a U on its long edge, of the metal slide (326).

28. The insertable card of claim 27, **characterized in that** the undercut (361) extends over a certain opening distance.

29. The insertable card of at least one of claims 25-28 **characterized in that** the long edges (359, 360) of the second frame (325) each have one tab (366) bent on its long edge at an angle of 90° fitting over them.

30. The insertable card of claim 29, **characterized in that** at least one longitudinal leg (354, 355) of the frame (322) is widened compared with the aligned lengthening leg (359, 360) of the second frame (325).

31. The insertable card of claim 30, **characterized in that** the longitudinal leg (354, 355) of the frame (322) has a guide groove of a certain length that is aligned with the long edge of the longitudinal leg (359, 360) of the second frame (325).

32. The insertable card of at least one of claims 25-31, **characterized in that** the frame (322) and the second frame (325), which are provided with a single central transverse leg (357), extend over virtually the entire width of the printed circuit board (316).

33. The insertable card of claim 32, **characterized in that** parallel formed-on struts (368, 369) are provided on the terminal transverse legs (356, 358) of the frames (322, 325), the outer edges of the struts being aligned with the outer edge of the printed circuit board (316).

34. The insertable card of claim 33, **characterized in that** the struts (368, 369) are wedgelike in side view.

35. The insertable card of at least one of claims 25-34 **characterized in that** the frame component (319) is of plastic and is at least partly coated in metallizing fashion.

36. The insertable card of at least one of claims 25-35, **characterized in that** the frame component (319) and preferably its frame (322) is provided on the underside with pegs (327) that can be inserted and fixed in bores of the printed circuit board (316).

## Patentansprüche

1. Steckkarte (10, 110, 210, 310) für elektronische Geräte, in etwa länglich rechteckförmiger, flacher Form, mit einem Gehäuse (11, 111, 211, 311), mit einer im Gehäuse aufgenommenen Leiterplatte (16, 316), auf der eine Kontaktiereinrichtung (23, 123, 223, 323) für eine Chipkarte (20, 120, 220, 320), wie beispielsweise SIM-Karte, elektrisch gehalten ist, und mit einer Aufnahme, deren Rahmen (22, 122, 322) die eingebrachte Chipkarte (20, 120, 220, 320) zwischen sich aufnimmt und mit einer Öffnung (24, 124, 224, 324) in einer der flächigen Seiten des Gehäuses (11, 111, 211, 311) in Verbindung steht, **dadurch gekennzeichnet, dass** das Gehäuse (11, 111, 211, 311) ein oberes und ein unteres im Wesentlichen halbschalenartig ausgebildetes Gehäuseteil (12, 13; 113, 213, 313) ausweist, wobei eines der beiden Gehäuseteile (12, 13; 112, 113, 213) die Öffnung aufweist, die mit dem Rahmen (22, 122, 322) in Verbindung steht, und dass die Chipkarte (20, 120, 320), die in eingestecktem Zustand unterhalb der Oberfläche des betreffenden Gehäuseteils liegt, durch ein Mittel (26, 113, 213) gegen die Kontaktiereinrichtung (23, 123, 223, 323) gedrückt ist.

2. Steckkarte nach Anspruch 1, **dadurch gekennzeichnet, daß** der Rahmen (22) ein von der Kontaktiereinrichtung (23) separates Bauteil ist und auf der Leiterplatte (16) befestigt ist.

3. Steckkarte nach Anspruch 2, **dadurch gekennzeichnet, daß** der Rahmen (22) umlaufend geschlossen ist und mit der Öffnung (24) allseitig fluchtet.

4. Steckkarte nach Anspruch 2 oder 3, **dadurch gekennzeichnet, daß** die Öffnung (24) verschließbar ist und dass zu ihrem Verschließen im betreffenden Gehäuseteil (12, 13) ein metallischer Schieber (26) vorgesehen ist.

5. Steckkarte nach Anspruch 4, **dadurch gekennzeichnet, daß** der Schieber (26) im Bereich der Unterseite des betreffenden Gehäuseteils (12, 13) angeordnet ist.

6. Steckkarte nach Anspruch 4 oder 5, **dadurch gekennzeichnet, daß** der Schieber (26) im Rahmen (22) geführt ist.

7. Steckkarte nach Anspruch 6, **dadurch gekennzeichnet, daß** der Rahmen (22) an beiden Längsseiten (29) Führungsnuten (28) für den Schieber (26) besitzt.

8. Steckkarte nach Anspruch 7, **dadurch gekennzeichnet, daß** im Bereich mindestens einer der Führungsnuten (28) Rastpositionen (33,34) vorgesehen sind.

9. Steckkarte nach mindestens einem der Ansprüche 4 bis 8, **dadurch gekennzeichnet, daß** der metallische Schieber (26) Ausprägungen zur Kontaktierung mit der Unterseite des betreffenden metallischen Gehäuseteils (13) aufweist.

10. Steckkarte nach Anspruch 1, **dadurch gekennzeichnet, daß** der Rahmen (128) ein mit der Kontaktiereinrichtung (123, 223) einstückiges Bauteil ist.

11. Steckkarte nach Anspruch 10, **dadurch gekennzeichnet, daß** die Öffnung (124, 224) im betreffenden Gehäuseteil (113, 213) eine der lichten Weite des Rahmens (122) der Kontaktiereinrichtung (123, 223) entsprechende Breite besitzt, jedoch in Längsrichtung kürzer ist.

12. Steckkarte nach Anspruch 11, **dadurch gekennzeichnet, daß** der Rahmen (124) der Kontaktiereinrichtung mit seinen beiden Querenden vom betreffenden Gehäuseteil (113) verdeckt angeordnet ist.

13. Steckkarte nach Anspruch 11 oder 12, **dadurch gekennzeichnet, daß** der Rahmen (122) der Kontaktiereinrichtung (123) an einem Querende mit seinem die lichte Höhe zur Unterseite des betreffenden Gehäuseteils vergrößernden bewegbaren Halteelement (142) versehen ist.

14. Steckkarte nach Anspruch 13, **dadurch gekennzeichnet, daß** das Halteelement durch eine federnde Wippe (142) gebildet ist, die durch eine Ausnehmung (147) im betreffenden Gehäuseteil (113) betätigbar ist.

15. Steckkarte nach mindestens einem Ansprüche 10 bis 14, **dadurch gekennzeichnet, daß** die Öffnung (124) im Gehäuseteil durch die Chipkarte (120) verschließbar ist.

16. Steckkarte nach Anspruch 10, **dadurch gekennzeichnet, daß** die Öffnung (224) im betreffenden Gehäuseteil (213) gegenüber dem Rahmen der Kontaktiereinrichtung (223) in Längsrichtung versetzt angeordnet ist.

17. Steckkarte nach Anspruch 16, **dadurch gekennzeichnet, daß** das Gehäuseteil (213) in einem Bereich über der Kontaktiereinrichtung (223) mit einem Längsschlitz (252) versehen ist.

18. Steckkarte nach mindestens einem der vorhergehenden Ansprüche, **dadurch gekennzeichnet, daß** der Rahmen (22, 122) randinnenseitig mit einem Codierungselement (31, 131) für die Chipkarte (20, 120, 220) versehen ist.

19. Steckkarte nach Anspruch 18, **dadurch gekennzeichnet, daß** das Codierungselement durch eine abgeschrägte Ecke (31, 131) im Rahmen (22, 122) gebildet ist.

20. Steckkarte nach mindestens einem der Ansprüche 13, 14, 18 und 19, **dadurch gekennzeichnet, daß** das Codierungselement (131) am Halteelement (242) vorgesehen ist.

21. Steckkarte nach mindestens einem der vorhergehenden Ansprüche, **dadurch gekennzeichnet, daß** der Rahmen (22) in Teilbereichen mit leitfähigem Material belegt ist.

22. Steckkarte nach mindestens einem der Ansprüche 1 - 20, **dadurch gekennzeichnet, daß** der Rahmen (22) aus elektrisch leitfähigem Kunststoff ist.

23. Steckkarte nach mindestens einem der vorhergehenden Ansprüche, **dadurch gekennzeichnet, daß** die Kontaktiereinrichtung (23, 123, 223) mit Federzungen (36, 136) versehen ist, auf denen die Chipkarte (20, 120, 220) elektrisch kontaktierend aufliegt.

24. Steckkarte nach mindestens einem der vorhergehenden Ansprüche, **dadurch gekennzeichnet, dass** die Kontaktiereinrichtung (123, 232) mit einer Ausgabefeder (137) versehen ist.

25. Steckkarte nach Anspruch 1, **dadurch gekennzeichnet, dass** die Öffnung (324) mittels eines metallischen Schiebers (326) verschließbar ist, und dass der metallische Schieber (326) zumindest mit seinen vorderen und hinteren Bereichen seiner Längsränder den Rahmen (322) bzw. Verlängerungen (359, 360) der Längsränder (354, 355) des Rahmens (322) führend umbzw. übergreift.

26. Steckkarte nach Anspruch 25, **dadurch gekennzeichnet, daß** die Verlängerungen (359, 360) der Längsränder (354, 355) des Rahmens (322) zu einem zweiten Rahmen (325) ergänzt sind.

27. Steckkarte nach Anspruch 25 oder 26, **dadurch gekennzeichnet, daß** der Rahmen (322) längsrandseitig jeweils einen durch eine Hinterschneidung (361) gebildeten und die Oberseite mitbildenden Längssteg aufweist, der von einem längsrandseitig U-förmig umgebogenen Lappen (362) des metallischen Schiebers (326) umgriffen ist.

28. Steckkarte nach Anspruch 27, **dadurch gekennzeichnet, dass** die Hinterschneidung (361) über einen bestimmten Öffnungsweg verläuft.

29. Steckkarte nach mindestens einem der Ansprüche 25 - 28, **dadurch gekennzeichnet, daß** die Längsränder (359, 360) des zweiten Rahmens (325) von jeweils einem längsrandseitig um 90° umgebogenen Lappen (366) übergriffen sind.

30. Steckkarte nach Anspruch 29, **dadurch gekennzeichnet, daß** mindestens ein Längsschenkel (354, 355) des Rahmens (322) gegenüber dem fluchtenden Verlängerungsschenkel (359, 360) des zweiten Rahmens (325) verbreitert ist.

31. Steckkarte nach Anspruch 30, **dadurch gekennzeichnet, daß** der Längsschenkel (354, 355) des Rahmens (322) eine mit dem Längsrand des Längsschenkel (359, 360) des zweiten Rahmens (325) fluchtende Führungsnut bestimmter Länge aufweist.

32. Steckkarte nach mindestens einem der Ansprüche 25 - 31, **dadurch gekennzeichnet, daß** der Rahmen (322) und der zweite Rahmen (325), die mit einem einzigen mittigen Querschenkel (357) versehen sind, über nahezu die gesamte Breite der Leiterplatte (316) sich erstrecken.

33. Steckkarte nach Anspruch 32, **dadurch gekennzeichnet, daß** an die Endquerschenkel (356, 358) der Rahmen (322, 325) parallel angeformte Holme (368, 369) vorgesehen sind, deren Außenkanten mit der Außenkante der Leiterplatte (316) fluchten.

34. Steckkarte nach Anspruch 33, **dadurch gekennzeichnet, daß** die Holme (368, 369) in Seitenansicht gesehen keilförmig sind.

35. Steckkarte nach mindestens einem der Ansprüche 25 - 34, **dadurch gekennzeichnet, daß** das Rahmenbauteil (319) aus Kunststoff und zumindest teilweise metallisierend beschichtet ist.

36. Steckkarte nach mindestens einem der Ansprüche 25 - 35, **dadurch gekennzeichnet, daß** das Rahmenbauteil (319), vorzugsweise dessen Rahmen (322), an der Unterseite mit in Bohrungen der Leiterplatte (316) einsteckbar fixierbaren Zapfen (327) versehen ist.

## Revendications

1. Carte à insérer (10, 110, 210, 310) pour équipement électronique, de forme plane, rectangulaire, approximativement allongée, comprenant un boîtier (11, 111, 211, 311), comprenant une carte à circuits imprimés (16, 316) qui est reçue dans le boîtier et sur laquelle un dispositif de mise en contact (23, 123, 223, 323) pour une carte à puce (20, 120, 220, 320), telle qu'une carte SIM, est maintenu sur le plan électrique, et comprenant un réceptacle dont le cadre (22, 122, 322) reçoit la carte à puce introduite (20, 120, 220, 320), et communiquant avec une ouverture (24, 124, 224, 324) dans l'un des côtés plats du boîtier (11, 111, 211, 311), **caractérisée en ce que** le boîtier (11, 111, 211, 311) comprend une partie de boîtier supérieure et une partie de boîtier inférieure (12, 13 ; 113, 213, 313) réalisées essentiellement sous la forme de demi-coques, l'une des deux parties de boîtier (12, 13 ; 112, 213, 313) ayant une ouverture qui communique avec le cadre (22, 122, 322), qui est maintenue sur la carte à circuits imprimés (16, 316), et **en ce que** la carte à puce (20, 120 ; 320) disposée au-dessous de la surface de la partie de boîtier correspondant lorsqu'elle est insérée est pressée par des moyens (26, 113, 213) contre le dispositif de mise en contact (23, 123, 223, 323).

2. Carte à insérer selon la revendication 1, **caractérisée en ce que** le cadre (22) est un composant séparé vis-à-vis du dispositif de mise en contact (23) et est fixé à la carte à circuits imprimés (16).

3. Carte à insérer selon la revendication 2, **caractérisée en ce que** le cadre (22) est refermé sur tout le pourtour, et **en ce qu'**il est aligné avec l'ouverture (24) sur les côtés.

4. Carter à insérer selon l'une ou l'autre des revendications 2 et 3, **caractérisée en ce que** l'ouverture (24) est refermable, et **en ce qu'**il est prévu pour sa fermeture un coulisseau en métal (26) dans la partie de boîtier concernée (12, 13).

5. Carte à insérer à selon la revendication 4, **caractérisée en ce que** le coulisseau (26) est disposé dans la région de la face inférieure de la partie de boîtier concernée (12, 13).

6. Carte à insérer selon l'une ou l'autre des revendications 4 et 5, **caractérisée en ce que** le coulisseau (26) est guidé dans le cadre (22).

7. Carte à insérer selon la revendication 6, **caractérisée en ce que** le cadre (22) comporte des gorges de guidages (28) pour le coulisseau (26) sur ses deux côtés longs (29).

8. Carte à insérer selon la revendication 7, **caractérisée en ce que** des positions de détente (33, 34) sont prévues dans la région de l'une au moins des gorges de guidages (28).

9. Carte à insérer selon l'une au moins des revendications 4 à 8, **caractérisée en ce que** le coulisseau en métal (26) a des projections pour entrer en contact avec la face inférieure de la partie de boîtier métallique concernée (13).

10. Carte à insérer selon la revendication 1, **caractérisée en ce que** le cadre (128) est un composant intégral avec le dispositif de mise en contact (123, 223).

11. Carte à insérer selon la revendication 10, **caractérisée en ce que** l'ouverture (124, 224) dans la partie de boîtier concerné (113, 213) a une largeur correspondant à la largeur intérieure du cadre (122) du dispositif de mise en contact (123, 223), mais **en ce qu'**elle est plus courte dans la direction longitudinale.

12. Carte à insérer selon la revendication 11, **caractérisée en ce que** le cadre (124) du dispositif de mise en contact est ainsi disposée que ses deux extrémités transversales sont couvertes par la partie de boîtier concernée (113).

13. Carte à insérer selon l'une ou l'autre des revendications 11 et 12, **caractérisée en ce que** le cadre (122) du dispositif de mise en contact (123) est pourvu sur une extrémité transversale d'un élément de retenue mobile (142), qui augmente la hauteur intérieure vers la face inférieure de la partie de boîtier concernée.

14. Carte à insérer selon la revendication 13, **caractérisée en ce que** l'élément de retenue est formé par un élément basculant élastique (148), lequel peut être actionné à travers un évidement (147) dans la partie de boîtier concernée (113).

15. Carte à insérer selon l'une au moins des revendications 10 à 14, **caractérisée en ce que** l'ouverture (124) dans la partie de boîtier est refermable au moyen de la carte à puce (120).

16. Carte à insérer selon la revendication 10, **caractérisée en ce que** l'ouverture (224) dans la partie de boîtier concernée (213) est disposée longitudinalement en décalage par rapport au cadre du dispositif de mise en contact (223).

17. Carte à insérer selon la revendication 16, **caractérisée en ce que** la partie de boîtier (213) est pourvue d'une fente longitudinale (252) dans une région au-dessus du dispositif de mise en contact (223).

18. Carte à insérer selon l'une au moins des revendications précédentes, **caractérisée en ce que** le cadre (22, 122) est pourvu sur sa bordure intérieure d'un élément de codage (31, 131) pour la carte à puce (20, 120, 220).

19. Carte à insérer selon la revendication 18, **caractérisée en ce que** l'élément de codage est formé par un coin biseauté (31, 131) dans le cadre (22, 122).

20. Carte à insérer selon l'une au moins des revendications 13, 14, 18 et 19, **caractérisée en ce que** l'élément de codage (131) est prévu sur l'élément de retenue (242).

21. Carte à insérer selon l'une des revendications précédentes, **caractérisée en ce que** le cadre (22) est revêtu de matériau conducteur dans certaines régions.

22. Carte à insérer selon l'une au moins des revendications 1 à 20, **caractérisée en ce que** le cadre (22) comprend une matière plastique électriquement conductrice.

23. Carte à insérer selon l'une des revendications précédentes, **caractérisée en ce que** le dispositif de mise en contact (23, 123, 223) est pourvu de languettes-ressorts (36, 136), sur lesquelles la carte à puce (20, 120, 220) repose de manière à établir un contact électrique.

24. Carte à insérer selon l'une des revendications précédentes, **caractérisée en ce que** le dispositif de mise en contact (123, 232) est pourvu d'un ressort d'éjection (137).

25. Carte à insérer (310) selon la revendication 1, **caractérisée en ce que** l'ouverture (324) est refermable au moyen d'un coulisseau métallique (326), et **en ce que** le coulisseau métallique (326), au moins dans ses régions antérieure et postérieure avec ses bordures longues, s'engage en guidage autour du et par-dessus le cadre (322) ou des extensions (359, 360) des bordures longues (354, 355) du cadre (322).

26. Carte à insérer selon la revendication 25, **caractérisée en ce que** les extensions (359, 360) des bordures longues (354, 355) du cadre (322) sont prévues en supplément pour former un deuxième cadre (325).

27. Carte à insérer selon l'une ou l'autre des revendications 25 et 26, **caractérisée en ce que** le cadre (322) sur chaque bordure longue a une nervure longitudinale respective, formée par une contre-dépouille (361) et formant conjointement le sommet, ladite nervure étant embrassée par une patte (362), recourbée sous la forme d'un U sur sa bordure longue, du coulisseau métallique (326).

28. Carte à insérer selon la revendication 27, **caractérisée en ce que** la contre-dépouille (361) s'étend sur une certaine distance d'ouverture.

29. Carte à insérer selon l'une au moins des revendications 25 à 28, **caractérisée en ce que** les bordures longues (359, 360) du deuxième cadre (325) comprennent chacune une patte (366) recourbée sur sa bordure longue sous un angle de 90° en s'emboîtant par-dessus celle-ci.

30. Carte à insérer selon la revendication 29, **caractérisée en ce que** ledit au moins un bras longitudinal (354, 355) du cadre (322) est élargi par comparaison aux bras de prolongement alignés (359, 360) du deuxième cadre (325).

31. Carte à insérer selon la revendication 30, **caractérisée en ce que** le bras longitudinal (354, 355) du cadre (322) comporte une gorge de guidage d'une certaine longueur qui est alignée avec la bordure longue du bras longitudinal (359, 360) du deuxième cadre (325).

32. Carte à insérer selon l'une au moins des revendications 25 à 31, **caractérisée en ce que** le cadre (322) et le deuxième cadre (325), qui sont pourvus d'un unique bras transversal central (357), s'étendent pratiquement sur la totalité de la largeur de la carte à circuits imprimés (316).

33. Carte à insérer selon la revendication 32, **caractérisée en ce que** des tirants conformés parallèles (368, 369) sont prévus sur les bras transversaux terminaux (356, 358) des cadres (322, 325), les bordures extérieures des tirants étant alignées avec la bordure extérieure de la carte à circuits imprimés (316).

34. Carte à insérer selon la revendication 33, **caractérisée en ce que** les tirants (368, 369) présentent en vue latérale une forme analogue à des coins.

35. Carte à insérer selon l'une au moins des revendications 25 à 34, **caractérisée en ce que** le composant de cadre (319) est en matière plastique, et **en ce qu'**il est au moins partiellement revêtu de manière métallisée.

36. Carte à insérer selon l'une au moins des revendications 25 à 35, **caractérisée en ce que** le composant de cadre (319), et de préférence son cadre (322) est pourvu sur sa face inférieure de tétons (327) qui peuvent être insérés et fixés dans des trous de la carte à circuits imprimés (316).
